# EUROPEAN PATENT SPECIFICATION

(11) **EP 3 302 756 B1**
(45) Date of publication and mention of the grant of the patent: **09.12.2020**
(21) Application number: 16735686.4
(22) Date of filing: 25.05.2016
(51) Int. Cl.: B01D 46/00, B01D 46/10, B01D 46/52, B60L 1/00, H02P 21/00

(54) **COMPACT PANEL LIKE AIR FILTER CARTRIDGE WITH IMPROVED EFFICIENCY FOR I.C. MOTORS**
LUFTFILTERPATRONE IN FORM EINER KOMPAKTEN PLATTE MIT VERBESSERTEM WIRKUNGSGRAD FÜR INTEGRIERTE SCHALTUNG MOTOREN
CARTOUCHE DE FILTRE À AIR COMPACTE EN FORME DE PANNEAU D'EFFICACITÉ SUPÉRIEURE POUR MOTEURS À COMBUSTION INTERNE

(30) Priority: 03.06.2015 IT UB201520134 U
(43) Date of publication of application: 11.04.2018
(60) Divisional application: 20204597.7
(73) Proprietor: Officine Metallurgiche G. Cornaglia S.p.A., 10092 Beinasco (TO) (IT)
(72) Inventor: CORNAGLIA, Umberto, 10027 Moncalieri (TO) (IT); CORNAGLIA, Pier Mario, 10024 Moncalieri (TO) (IT)
(74) Representative: Robba, Pierpaolo
(86) International application number: PCT/IB2016/053067
(87) International publication number: WO 2016/193863

(56) References cited:
- WO-A1-2011/026999
- WO-A1-2012/175438
- WO-A1-2013/093685
- DE-A1-102014 016 908

## Description

The invention relates to a compact panel-like air filter cartridge with improved efficiency for I.C. motors.

Panel-like air filter cartridges with several shapes and sizes are known in the art. Such cartridges usually comprise a pack of filtering material having a prismatic shape. The filtering material has an upstream face and a downstream face relative to the air flow. The upstream face is the first to be hit by the impure air flow passing through the cartridge. The impure air flow releases particles of dirt while passing through the filtering material. The purified air flow exits the cartridge through the downstream face. The upstream face and the downstream face are usually flat and lie on mutually parallel planes. Overall, therefore, this type of cartridges has the shape of a parallelepiped panel. Cartridges with oblique faces or crooked shapes are also known, devised for adapting to the particular shape of the cartridge container, which in turn has to adapt to the space, sometimes limited and irregular, available in the motor compartment. An example of a cartridge of the aforementioned known type is described in WO 2013/093685.

In the field, the need for air filter cartridges with high filtration capacity and compact size is particularly felt. The main object of the present invention is to meet such need. Therefore the object of the present invention is to provide a panel-like air filter cartridge with high efficiency that can be made with small size and thus adapt to motor compartments which are small-sized or in which there is limited space for the filter cartridge.

This object is achieved with the characteristics claimed in the appended Claim 1. Further objects of the invention are achieved with the characteristics claimed in the dependent claims.

The cartridge according to the invention is of the kind comprising a pack of filtering material, made of pleated paper. The cartridge further comprises a gasket defining at least two coplanar peripheral frames having a side in common. The gasket may further comprise further frames coplanar to the first two frames and provided or not with filtering material. A first frame surrounds the downstream face of the cartridge and a second frame surrounds a cartridge portion free from filtering material. The gasket is made of polyurethane material, preferably of a hot-melt, hardened polyurethane resin. The purpose of the gasket is to guarantee adequate sealing between the cartridge and the walls of the housing of the filter box in which the cartridge is housed.

The invention provides that the upstream face defines at least two flat portions lying on non-coincident planes, wherein the thickness of the pack of filtering material at the first portion is greater than the thickness of the pack at the second portion. The second portion, in which the cartridge has a smaller thickness, lies on a plane oblique relative to the downstream face. According to the invention, it is therefore possible to increase the overall area of the surface of the upstream face and reduce the space requirement of the cartridge and, consequently, of the housing of the housing of the filter box. When the second portion is oblique, the thickness of the filtering material pack of the cartridge is progressively reduced, depending on the inclination of the oblique portion, along a preferably transverse direction. According to the invention, the thickness of the filtering pack along a first longitudinal face is between one third and one eighth of the thickness of the cartridge along the opposite longitudinal face. In this way, the filtering capacity of the pack of filtering material remains high and the size of the cartridge is remarkably reduced. In particular, the overall height requirement of the cartridge is reduced, this involving the advantage that the cartridge can be incorporated in small-sized spaces.

According to a particular aspect of the invention, the gasket comprises an outer side in which an oblique portion is defined. This arrangement allows to reduce the length of one of the sides of the cartridge and, correspondingly, the overall size of the cartridge and, consequently, of the housing of the filter box.

The invention will be described below with reference in particular to the annexed figures, in which:

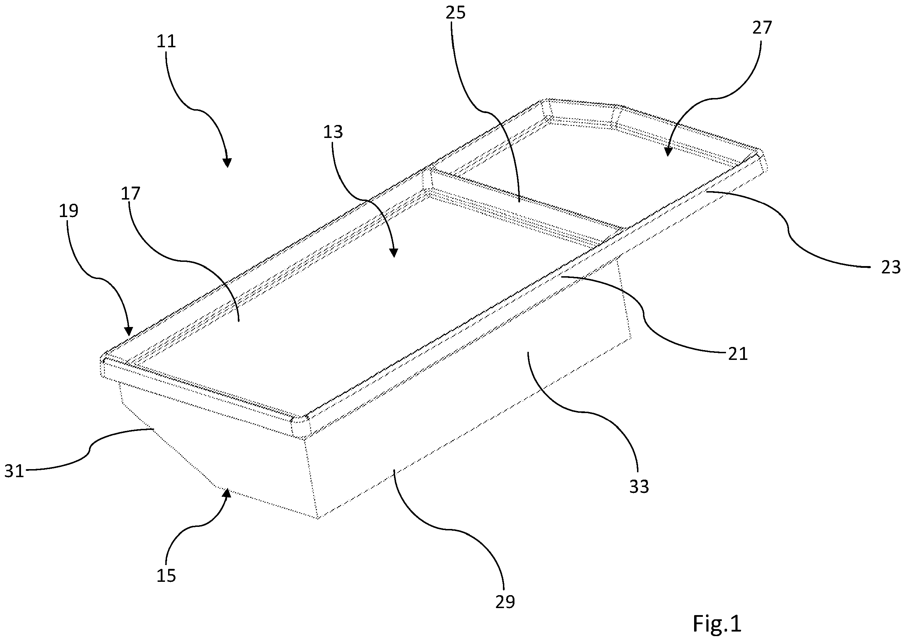

- Fig. 1 is a perspective view from above of a filter cartridge made according to the invention;
- Fig. 2 is a top plan view of the cartridge of Fig. 1;
- Fig. 3 is a plan view of a side face of the cartridge of Fig. 1;
- Fig. 4 is a bottom plan view of the cartridge of Fig. 1;
- Fig. 5 is a plan view of a front face of the cartridge of Fig. 1.

Referring to the annexed figures, there is illustrated a panel-like air filter cartridge 11 made according to the invention. The cartridge 11 is arranged to be inserted into the air intake circuit of an I.C. motor. The cartridge 11 comprises a pack 13 of filtering material. The pack 13 has a prismatic shape in which an upstream face 15 and a downstream face 17 are defined. The upstream face 15 serves for inletting the air to be purified. The downstream face serves for outletting the air that has been purified.

The cartridge 11 comprises a polyurethane peripheral gasket 19. The gasket 19 defines a first frame 21 and a second frame 23. The first frame and the second frame 23 are mutually coplanar and have a side 25 in common. The first frame 21 further surrounds the downstream face 17. The second frame 23 surrounds a portion 27 of the cartridge 11 that is free from filtering material. In the illustrated example, the gasket 19 comprises two frames only, however, according to the invention, said gasket 19 may also comprise further frames coplanar to the first two frames and provided or not with filtering material.

According to the invention, the downstream face 17 is substantially flat. Still according to the invention, the upstream face 15 comprises a first flat portion 29 parallel to the downstream face 17, and a second flat portion 31 oblique relative to the downstream face 17. Advantageously, still according to the invention, the area of the surface of the second portion 31 oblique relative to the upstream face 15 is at least equal to the area of the surface of the first portion 29 of the upstream face 15.

According to a particular aspect of the invention, the area of the surface of the second portion 31 oblique relative to the upstream face 15 is at least 5% and more preferably at least 10% larger than the area of the surface of the first portion 29 of the upstream face 15.

According to the invention, the pack 13 of filtering material defines a longitudinal section 33 and a cross-section 35 that are perpendicular to the downstream face 17 and to the first portion 29 of the upstream face 15, the longitudinal section having a substantially rectangular shape and the cross-section 35 having a substantially rectangular trapeze-like shape.

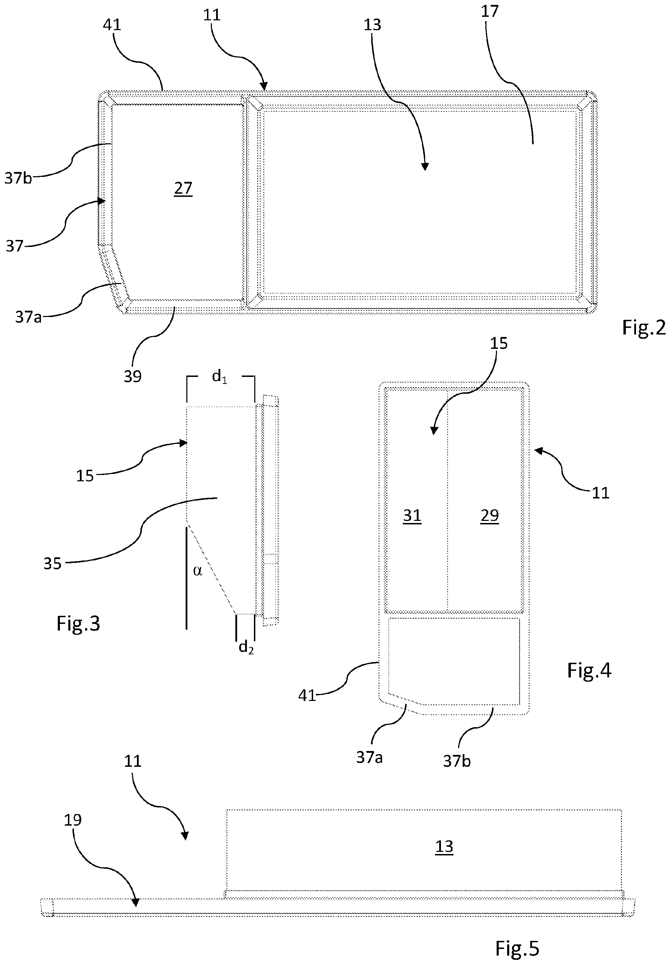

As can be appreciated particularly from Fig. 3, the thickness of the filtering material pack 13 of the cartridge 11 is progressively reduced, depending on the inclination of the second, oblique portion 31, along the transverse direction. In a preferred embodiment, the second, oblique portion 31 is inclined at an angle α of about 30° relative to the plane of the first portion 29 of the upstream face 15. According to the invention, the thickness d₁ of a first front face of the pack 13 is comprised between 1/3 and 1/8 of the thickness d₂ of the opposite face.

According to another particular aspect of the invention, the filtering material pack 13 comprises pleated paper in which the pleats of the paper are mutually parallel and arranged longitudinally, i.e. parallel to the longitudinal section 33.

According to the invention, the first frame 21 has a substantially rectangular shape with its sides being parallel in pairs and rectilinear, whereas the second frame 23 has an approximately rectangular shape with a transverse side 37 having an oblique portion 37a adjoining a transverse rectilinear portion 37b and a perpendicular longitudinal side 39. Still according to the invention, the frames, be they two as in the illustrated example or more than two, may have a rectangular trapeze-like shape and have or not have a side provided with an oblique connecting portion. Advantageously, in this way the longitudinal side 39 of the gasket 19 is shorter than the opposite side 41 and thus the overall size of the cartridge is reduced.

## Claims

1. Panel-like air filter cartridge (11) for I.C. motors, comprising a pack (13) of filtering material having a prismatic shape and comprising pleated paper in which an upstream face (15) and a downstream face (17) are defined for inletting the air to be purified and for outletting the air that has been purified, respectively, a polyurethane peripheral gasket (19) defining a corresponding first frame (21) surrounding the downstream face (17), and a second frame (23) surrounding a portion (27) of the cartridge (11) free from filtering material, the first frame (21) and the second frame (23) being coplanar and having a side (25) in common, wherein said downstream face (17) is flat and said upstream face (15) comprises at least a first (29) and a second (31) flat portion, said first and second portions lying on non-coincident planes, said first flat portion (29) being parallel to the downstream face (17) and said second flat portion (31) being oblique relative to the downstream face (17), the thickness of the filtering material pack (13) at the first portion (29) being greater than the thickness of the filtering material pack (13) at the second portion (31), the pack (13) of filtering material defining a longitudinal section (33) and a cross-section (35) that are perpendicular to the downstream face (17) and to the first portion (29) of the upstream face (15), the longitudinal section having a substantially rectangular shape and the cross-section (35) having a substantially rectangular trapeze-like shape, **characterized in that** the area of the second portion (31) of the upstream face (15) is at least equal to the area of the first portion (29) of said upstream face (15) and **in that** the thickness d1 of a first longitudinal front face of the pack (13) is comprised between 1/3 and 1/8 of the thickness d2 of the opposite longitudinal face.

2. Cartridge according to claim 1, wherein the area of the second portion (31) of the upstream face (15) is at least 5% larger than the area of the first portion (29) of the upstream side (15).

3. Cartridge according to claim 1, wherein the area of the second portion (31) of the upstream face (15) is at least 10% larger than the area of the first portion (29) of the upstream side (15).

4. Cartridge according to any of the preceding claims, wherein the pleats of the paper are mutually parallel and arranged longitudinally.

5. Cartridge according to any of the preceding claims, wherein the first frame (21) has a substantially rectangular shape.

6. Cartridge according to any of the preceding claims, wherein the second frame (23) has an approximately rectangular shape with a transverse side (37) provided with an oblique portion (37a) adjoining a transverse rectilinear portion (37b) and a perpendicular longitudinal portion (39).

7. Cartridge according to claim 6, wherein a first longitudinal side (39) of the gasket (19) is shorter than the opposite side (41).

8. Cartridge according to any of the preceding claims, wherein the thickness of the filtering material pack (13) is progressively reduced, depending on the inclination of the oblique portion, along a transverse direction.

## Patentansprüche

1. Plattenartige Luftfilterpatrone (11) für I.C. Motoren, mit einem Packen (13) Filtermaterial, der eine prismatische Form hat und plissiertes Papier enthält, in dem eine stromaufwärts gerichtete Seite (15) und eine stromabwärts gerichtete Seite (17) ausgebildet sind, um zu reinigende Luft einzulassen bzw. gereinigte Luft auszulassen, einer umlaufenden Polyurethandichtung (19), die einen entsprechenden ersten Rahmen (21) bildet, der die stromabwärts gerichtete Seite (17) umgibt, und einem zweiten Rahmen (23), der einen Teil (27) der Patrone (11) umgibt, der frei von Filtermaterial ist, wobei der erste Rahmen (21) und der zweite Rahmen (23) koplanar sind und eine gemeinsame Seite (25) haben, wobei die stromabwärts gerichtete Seite (17) flach ist und die stromaufwärts gerichtete Seite (15) wenigstens einen ersten (29) und einen zweiten (31) flachen Teil aufweist, wobei der erste und der zweite Teil in nicht übereinstimmenden Ebenen liegen, wobei der erste flache Teil (29) parallel zu der stromabwärts gerichteten Seite (17) und der zweite flache Teil (31) schräg zu der stromabwärts gerichteten Seite (17) ist, wobei die Dicke des Packens (13) Filtermaterial an dem ersten Teil (29) größer als die Dicke des Packens (13) Filtermaterial an dem zweiten Teil (31) ist, wobei der Packen (13) Filtermaterial einen Längsschnitt (33) und einen Querschnitt (35) hat, die senkrecht zu der stromabwärts gerichteten Seite (17) und zu dem ersten Teil (29) der stromaufwärts gerichteten Seite (15) sind, wobei der Längsschnitt eine im Wesentlichen rechteckige Form und der Querschnitt (35) eine im Wesentlichen rechteckig trapezartige Form hat, **dadurch gekennzeichnet, dass** die Fläche des zweiten Teils (31) der stromaufwärts gerichteten Seite (15) wenigstens so groß wie die Fläche des ersten Teils (29) der stromaufwärts gerichteten Seite (15) ist, und dass die Dicke d1 einer erste Längsvorderseite des Packens (13) zwischen 1/3 und 1/8 der Dicke d2 der gegenüberliegenden Längsseite beträgt.

2. Patrone nach Anspruch 1, wobei die Fläche des zweiten Teils (31) der stromaufwärts gerichteten Seite (15) wenigstens 5% größer als die Fläche des ersten Teils (29) der stromaufwärts gerichteten Seite (15) ist.

3. Patrone nach Anspruch 1, wobei die Fläche des zweiten Teils (31) der stromaufwärts gerichteten Seite (15) wenigstens 10% größer als die Fläche des ersten Teils (29) der stromaufwärts gerichteten Seite (15) ist.

4. Patrone nach einem der vorstehenden Ansprüche, wobei die Falten des Papiers zueinander parallel und in Längsrichtung angeordnet sind.

5. Patrone nach einem der vorstehenden Ansprüche, wobei der erste Rahmen (21) eine im Wesentlichen rechteckige Form hat.

6. Patrone nach einem der vorstehenden Ansprüche, wobei der zweite Rahmen (23) eine annährend rechteckige Form hat, wobei eine Querseite (37) mit einem schrägen Abschnitt (37a) versehen ist, der an einem querverlaufenden geradlinigen Abschnitt (37b) und ein senkrechten Längsabschnitt (39) anschließt.

7. Patrone nach Anspruch 6, wobei eine erste Längsseite (39) der Dichtung (19) kürzer als die gegenüberliegende Seite (41) ist.

8. Patrone nach einem der vorstehenden Ansprüche, wobei die Dicke des Packens (13) Filtermaterial in Querrichtung in Abhängigkeit von der Neigung des schrägen Abschnitts zunehmend abnimmt.

## Revendications

1. Cartouche de filtre à air de type panneau (11) pour des moteurs à combustion interne, comprenant un ensemble (13) de matériau de filtration ayant une forme prismatique et comprenant du papier plissé dans lequel une face amont (15) et une face aval (17) sont définies pour faire entrer l'air à purifier et pour faire sortir l'air qui a été purifié, respectivement, un joint périphérique en polyuréthane (19) définissant un premier cadre (21) correspondant entourant la face aval (17), et un second cadre (23) entourant une portion (27) de la cartouche (11) dépourvue de matériau de filtration, le premier cadre (21) et le second cadre (23) étant coplanaires et ayant un côté (25) en commun, dans laquelle la face aval (17) est plate et ladite face amont (15) comprend au moins une première (29) et une seconde (31) portion plate, lesdites première et seconde portions se trouvant sur des plans non coïncidants, ladite première portion plate (29) étant parallèle à la face aval (17) et ladite seconde portion plate (31) étant oblique par rapport à la face aval (17), l'épaisseur de l'ensemble (13) de matériau de filtration au niveau de la première portion (29) étant supérieure à l'épaisseur de l'ensemble (13) de matériau de filtration au niveau de la seconde portion (31), l'ensemble (13) de matériau de filtration définissant une section longitudinale (33) et une section en coupe (35) qui sont perpendiculaires à la face aval (17) et à la première portion (29) de la face amont (15), la section longitudinale ayant une forme sensiblement rectangulaire et la section en coupe (35) ayant une forme sensiblement de type trapèze rectangulaire, **caractérisée en ce que** l'aire de la seconde portion (31) de la face amont (15) est au moins égale à l'aire de la première portion (29) de ladite face amont (15) et **en ce que** l'épaisseur d1 d'une première face avant longitudinale de l'ensemble (13) est comprise entre 1/3 et 1/8 de l'épaisseur d2 de la face longitudinale opposée.

2. Cartouche selon la revendication 1, dans laquelle l'aire de la seconde portion (31) de la face amont (15) est plus grande d'au moins 5 % que l'aire de la première portion (29) du côté amont (15).

3. Cartouche selon la revendication 1, dans laquelle l'aire de la seconde portion (31) de la face amont (15) est plus grande d'au moins 10 % que l'aire de la première portion (29) du côté amont (15).

4. Cartouche selon l'une quelconque des revendications précédentes, dans laquelle les plis du papier sont mutuellement parallèles et agencés longitudinalement.

5. Cartouche selon l'une quelconque des revendications précédentes, dans laquelle le premier cadre (21) a une forme sensiblement rectangulaire.

6. Cartouche selon l'une quelconque des revendications précédentes, dans laquelle le second cadre (23) a une forme approximativement rectangulaire avec un côté transversal (37) pourvu d'une portion oblique (37a) jouxtant une portion rectiligne transversale (37b) et une portion longitudinale perpendiculaire (39).

7. Cartouche selon la revendication 6, dans laquelle un premier côté longitudinal (39) du joint (19) est plus court que le côté opposé (41).

8. Cartouche selon l'une quelconque des revendications précédentes, dans laquelle l'épaisseur de l'ensemble (13) de matériau de filtration est réduite progressivement, en fonction de l'inclinaison de la portion oblique, suivant une direction transversale.
